# EUROPÄISCHE PATENTSCHRIFT

(11) **EP 3 507 047 B1**
(45) Veröffentlichungstag und Bekanntmachung des Hinweises auf die Patenterteilung: **13.05.2020**
(21) Anmeldenummer: 17768688.8
(22) Anmeldetag: 30.08.2017
(51) Int. Cl.: B23K 7/00, B23K 9/28, B23K 37/02, B23K 37/053, B25J 5/02

(54) **SYSTEM UND VERFAHREN ZUM TRENNEN EINES ROHRFÖRMIGEN BAUTEILS**
SYSTEM AND METHOD TO CUT A TUBULAR COMPONENT
SYSTÈME ET PROCÉDÉ POUR COUPER UNE PIÈCE DE CONSTRUCTION EN FORME DE TUBE

(30) Priorität: 31.08.2016 DE 102016216388
(43) Veröffentlichungstag der Anmeldung: 10.07.2019
(73) Patentinhaber: Fraunhofer-Gesellschaft zur Förderung der angewandten Forschung e.V., 80686 München (DE)
(72) Erfinder: WANNER, Martin Christoph, 18211 Nienhagen (DE); HERHOLZ, Hagen, 18057 Rostock (DE); KLÖTZER, Christian, 18258 Schwaan (DE)
(74) Vertreter: Rösler, Uwe
(86) Internationale Anmeldenummer: PCT/EP2017/071742
(87) Internationale Veröffentlichungsnummer: WO 2018/041881

(56) Entgegenhaltungen:
- GB-A- 2 254 172
- US-A- 3 464 685

## Beschreibung

### Technisches Gebiet

Die Erfindung bezieht sich auf ein System zum Trennen eines rohrförmigen Bauteils, gemäß dem Oberbegriff des Anspruchs 1. Ein solches System ist aus dem Dokument US3464685 bekannt. Die Erfindung bezieht sich auch auf ein Verfahren zum Trennen eines rohrförmigen Bauteils unter Verwendung eines solchen Systems gemäß dem Anspruch 10 und auf eine Verwendung eines solchen Systems gemäß dem Anspruch 14.

### Stand der Technik

Im Zuge der Abkehr von konventionellen Energieerzeugungssystem wird die Erschließung erneuerbarer Energien stetig vorangetrieben. Zur Umsetzung der avisierten Energiewendeziele sollen Offshore-Windenergieanlagen einen wesentlichen Beitrag zur Stromerzeugung leisten. In Konsequenz dessen werden derzeit Windenergieanlagen mit immer größerer Leistung entwickelt. Die dabei erreichten Nabenhöhen sowie die notwendige und bevorzugte Anlagenerrichtung im küstenfernen Offshore-Bereich verlangen nach aufgelösten Gründungsstrukturen in Form so genannter Jackets, Tripiles sowie Tripods. Die Jacket-Konzepte haben sich bereits in der Öl- und Gasindustrie bewährt und haben aufgrund der aufgelösten Gitterstruktur einen Gewichtsvorteil von 40% bis 50% gegenüber so genannten Monopile-Strukturen. Hierbei entfällt ein Großteil der Errichtungskosten auf die Fertigung der als Schweißverbindungen ausgeführten Rohrknoten, die Rohr-Rohr-Verbindungen darstellen. Besonders groß ist deren Anzahl bei Jacket-Gründungen von Windrädern sowie den Gründungsstrukturen von Konverterplattformen. Da die kumulierten Errichtungskosten mit zunehmender Nabenhöhe steigen, sind zukünftig kostenreduzierende Fertigungsabläufe für diese Art von Gründungsstrukturen gefordert. Des Weiteren rücken auch Schwerpunktthemen wie die Errichtungslogistik aufgrund der stetigen Erschließung neuer, zumeist weit voneinander entfernter Errichtungsstandorte immer mehr in den Vordergrund.

Rohrknoten, die typischerweise aus einem Basisrohr und mindestens einem anzuschließenden Rohrstutzen bestehen, sind typische stahlbauliche Verbindungselemente sich kreuzender Rohre und kommen in hoher Anzahl an Strukturen in Gittermastbauweise, an Brücken und aufgelösten Strukturen wie den vorstehend erwähnten Jackets, Tripods oder Tripiles vor. Aufgrund verschiedener Typen von Jacket-Strukturen und unterschiedlicher konstruktiver Auslegungen, kommen Rohrknoten typischerweise in X-, Y-, K- und Doppel-K-Bauweise zum Einsatz. Innerhalb dieser Bauweisen unterscheiden sich die Knoten in Anschlusswinkel, Positionierung der Stutzen, Blechdicke und Rohrdurchmesser, so dass eine sehr große Anzahl verschiedenartiger Knotentypen bei nur einer aufgelösten Struktur zum Einsatz kommen kann.

Der Zuschnitt der Rohrstutzen, das heißt das Vorkonfektionieren eines Rohrstutzens durch Ausbilden einer geeignet gewählten Verschneidungskontur, längs der die Mantelflächen beider zu verbindender Rohrstutzen in Kontakt gebracht werden können, erfolgt nach derzeitigem Stand der Technik unter Anwendung vollmechanisierter Autogenschneidanlagen. Der Anschluss eines Rohrstutzens an ein Basisrohr erfolgt bei den typischen Rohrdurchmesser-Dimensionen von 1 bis 3 m durch manuelles Schweißen. Systemlösungen, die sowohl den Zuschnitt eines Rohrstutzens als auch das Schweißen der Rohrknoten in einer ganzheitlichen Systemlösung vereinen, existieren bislang nicht.

Für die Durchführung eines Rohrzuschnittes existieren vollmechanisierte Lösungen, die zur drehbaren Lagerung eines zu schneidenden bzw. lokal zu trennenden Rohres eine Spann- bzw. Auflageanordnung vorsehen, die ein zu trennendes Rohrstück motorisch unterstützt um eine horizontale Drehachse in Rotation zu versetzen vermag. Räumlich neben der das zu bearbeitende Rohrstück horizontal drehbar lagernden Spannanordnung ist ein wenigstens längs einer Linearachse bidirektional auslenkbares Trennwerkzeug angebracht, das in Überlagerung mit der Drehbewegung des horizontal gelagerten Rohrstückes längs der Mantelfläche des Rohrstückes verfahren wird, wodurch das Rohrstück längs einer vorgebbaren Trennschneidkurve separiert wird.

Derartige vollmechanisierte Rohrschneidanlagen gehen beispielsweise aus den Druckschriften EP 0 082 274 B1, DE 34 39 431 C2, DT 24 30 513 A1 sowie DD 150 564 hervor. Die bekannten auf dem vorstehenden Anlagenkonzept beruhenden Rohrschneidanlagen besitzen aufgrund ihres sehr großen Anlagenbauraumes sowie des hohen Anlagengesamtgewichtes eine zwingend ortsgebundene Anlageninstallation, deren örtliche Verlagerung an einen anderen Produktionsstandort mit sehr hohen Aufwendungen verbunden ist. Da die drehbare Lagerung des zu bearbeitenden Rohrstückes sowie die des Trennwerkzeuges voneinander mechanisch entkoppelt sind, bedarf es einer exakten räumlichen Anordnung beider Anlagenkomponenten. Ein weiterer Nachteil betrifft das Handling des vom Rohrstück abgetrennten, als so genanntes Schlechtteil bezeichneten Trennteils, das nur in einer undefinierten Weise vom Rohrstück abfällt bzw. abtransportiert wird. So kann beispielsweise der Zeitpunkt einer einsetzenden Relativbewegung zwischen dem Gut- und dem Schlechtteil oder der Zeitpunkt einer endgültigen Trennung beider Teile voneinander aufgrund des Zusammenwirkens mehrerer Einflussfaktoren, wie beispielsweise thermische Belastung des Bauteils, Schwerkraftwirkung etc. nicht eindeutig bestimmt werden. Dies kann sowohl zu einer örtlich begrenzten Beeinträchtigung der Schnittqualität sowie auch zur Beschädigung von Anlagenkomponenten oder dem zu schneidenden Rohrstück selbst führen.

Ebenfalls als nachteilig ist der umfangreiche Handlingsaufwand anzusehen, den es zu bewältigen gilt, um das zugeschnittene, in der Spannvorrichtung drehbar gelagerte, Gutteil aus der horizontalen Lage in eine für einen nachgeschalteten Fügeprozess an ein Basisrohr entsprechend vertikal umzulagern. So muss das zugeschnittene Rohrstück zunächst mittels einer Krananlage oder einer ähnlichen Handhabungstechnik mit entsprechender Traglast in eine vertikale Ausrichtung überführt und im Anschluss an das Basisrohr angesetzt werden, wobei zwischen beiden Prozessschritten ein Umspannen, das heißt ein Wechsel der entsprechenden mechanischen Anschlagpunkte erforderlich ist, wodurch der Handlingsaufwand vergrößert wird.

Aus der Druckschrift DE 10 2006 004 358 A1 sind ein Verfahren sowie eine Vorrichtung zum thermischen Trennen eines Rohres mittels eines Brennerkopfes zu entnehmen, bei dem auf eine Rohrspann- und Drehvorrichtung verzichtet wird. Der Rohrzuschnitt erfolgt gleichwohl in horizontaler Lagerung des Rohres, jedoch wird der Zuschnitt von der Innenseite des Rohres ausgeführt und die umlaufende Trenn-Schweiß-Brennerbewegung entlang einer Schnittkontur wird durch das Schneidbrennersystem selbst durchgeführt. Im Übrigen weist auch die bekannte Vorrichtung sämtliche Nachteile bezüglich der Anlageninstallation, des Ablösens des Schlechtteils sowie des großen Handlingsaufwandes auf.

Aus der Druckschrift WO 2013/072016 A1 gehen ein Verfahren sowie eine Vorrichtung zum Schweißen sowie auch Schneiden von Bauteilen, insbesondere von Rohren zur Bildung von Offshore-Strukturen hervor. Die Schneid- bzw. Schweißvorrichtung sieht unmittelbar am Basisrohr anbringbare Linearführungen vor, längs der jeweils ein Trennschweißgerät bidirektional auslenkbar gelagert ist. Die Erreichbarkeit bzw. Zugänglichkeit der Bahnpunkte längs der Trenn- bzw. Verschneidkontur ist stark von der Reichweite sowie dem Bauraum der das Trenn-bzw. Schweißwerkzeug tragenden Manipulatoreinheit abhängig, die zumeist in Form eines Industrieroboters ausgebildet ist. Eine Vergrößerung der Manipulatorreichweite wirkt sich zumeist in einer Vergrößerung des Bauraumes sowie einer Erhöhung des Gesamtgewichtes der das Trenn- bzw. Schweißwerkzeug tragenden Kinematik aus, was sich unmittelbar auf die Schienentraglast der direkt am Rohr angebrachten Schienenlinearführung auswirkt. Mit der bekannten Trenn-Schweiß-Anordnung ist es jedoch lediglich möglich, lokale Öffnungen längs der Mantelfläche des Basisrohres einzubringen. Rohrzuschnitte, die längs des gesamten Rohrumfanges umlaufen sind mit der bekannten Vorrichtung nicht möglich.

Der Druckschrift DE 10 2007 015 071 A1 ist ein modular aufgebauter Automat zum Schneiden und Schweißen von rohrförmigen und ebenen Werkstücken zu entnehmen, der eine um 7 Raumachsen bewegbare Kinematik vorsieht, an der das Bearbeitungswerkzeug angebracht ist. der Automat ist kompakt ausgebildet und kann hängend, translatorisch verschiebbar im Raum aufgestellt werden.

Der Druckschrift DE 10 2013 018 417 A1 ist eine Rohrprofilschneidmaschine zu entnehmen, mit der es möglich ist horizontal gelagerte Rohre zu bearbeiten. Hierzu sieht die Maschine einen vertikal bewegbaren Roboterarm vor, an dessen Armende ein Schneidwerkzeug angebracht ist. Über einen translatorischen sowie auch rotatorischen Fördermechanismus wird das zu bearbeitende Rohr dem Bearbeitungsbereich des Schneidwerkzeuges zugeführt.

Die Druckschrift US 3 464 685 A offenbart eine Trennanordnung für ein rohrförmiges Bauteil mit einer temporär am Bauteil anbringbaren Befestigungsmanschette, an der eine Schneide- und Schweißvorrichtung axial ortsfest längs des rohrförmigen Bauteils fixierbar ist. Das rohrförmige Bauteil nebst der Schneid- und Schweißanordnung wird vielmehr über einen separaten Träger getragen.

Die Druckschrift GB 2 254 172 A offenbart einen Schweißroboter, dessen Schweißwerkzeug relativ zu einem feststehenden zu bearbeitenden Werkstück frei positionierbar angebracht ist. Eine Verbindung zwischen dem Schweißroboter und dem Werkstück besteht nicht. Auch ist eine Handhabung des Werkstückes nicht weiter vorgesehen.

### Darstellung der Erfindung

Der Erfindung liegt die Aufgabe zugrunde ein System zum Trennen eines rohrförmigen Bauteils, das für die Ausbildung eines Tragwerkes, insbesondere in Form von Offshore- oder Brückenkonstruktionen geeignet ist, derart weiterzubilden, dass der Zuschnitt von Rohrstutzen mit hoher Exaktheit durchführbar ist und dies mit einer Trennanordnung, die mobil einsetzbar ist, ohne großen Transport- und Montageaufwand an beliebigen Einsatzorten errichtet werden kann. Die Qualität und Genauigkeit mit der ein rohrförmiges Bauteil mittels eine Trennwerkzeuges längs einer vorgegebenen Trenntrajektorie durchtrennt werden soll, soll signifikant verbessert werden. Ferner gilt es Voraussetzungen zu schaffen, den gesamten verfahrenstechnischen Aufwand zu reduzieren, der für ein Vorkonfektionieren, d.h. Zuschneiden eines Rohrstückes, sowie das Ansetzen und Verbinden des zugeschnittenen Rohrstückes an ein entsprechend vorkonfektioniertes Basisrohr erforderlich ist, zu reduzieren.

Die Lösung der der Erfindung zugrundeliegenden Aufgabe ist im Anspruch 1 angegeben. Gegenstand des Anspruches 10 ist ein lösungsgemäßes Verfahren zum Trennen eines rohrförmigen Bauteils. Den Erfindungsgedanken in vorteilhafter Weise ausbildende Merkmale sind Gegenstand der Unteransprüche sowie der weiteren Beschreibung insbesondere unter Bezugnahme auf die illustrierten Ausführungsbeispiele zu entnehmen.

Das lösungsgemäße System zum Trennen eines rohrförmigen Bauteils, das für die Ausbildung eines Tragwerkes, insbesondere in Form von Offshore- oder Brückenkonstruktionen geeignet ist und über eine Rohrlängserstreckung mit beidseitig offen ausgebildeten Rohrenden verfügt, weist ein mobiles Transportmodul auf, das eine Aufnahmeplattform mit einer an unterschiedliche Rohrdurchmesser adaptierbare Rohrspannvorrichtung aufweist, die zur Aufnahme und stabilen Lagerung des rohrförmigen Bauteils derart ausgebildet ist, so dass das Bauteil in vertikaler Orientierung mit seinem ersten, unteren Rohrende in lösbar festen Eingriff mit der Rohrspannvorrichtung bringbar ist.

Ferner ist eine Trennanordnung vorgesehen, die an einer Tragstruktur vertikal anhebbar und absenkbar, vorzugsweise räumlich frei positionierbar angebracht ist. Die Tragstruktur kann in vorteilhafter Weise in Art eines gerüstartigen Überbaus oder in Form eines kranartigen Tragarmes ausgebildet sein, an dem die Trennschweißanordnung vertikal bewegt, vorzugsweise räumlich frei positionierbar angebracht ist. Vorzugsweise ist die Tragstruktur montierbar und demontierbar ausgebildet, so dass ihr Einsatz ortsungebunden ist und bedarfsgerecht an land- oder wassergestützten Produktionsstätten auf- und abgebaut werden kann. Selbstverständlich können für die Tragstruktur auch bereits vor Ort vorhandene Ressourcen in Form von Traggerüsten oder Krananlagen genutzt werden.

Die Trennanordnung verfügt überdies über eine Befestigungsanordnung zur lösbar festen Fügung am oberen, zweiten Rohrende des vertikal auf dem mobilen Transportmodul aufsitzenden rohrförmigen Bauteils. Die Befestigungsanordnung greift hierzu in das obere Rohrende ein und vermag durch Aufbringen einer ausschließlich auf die Innenwand des rohrförmigen Bauteils wirkenden Klemmkraft eine selbstzentrierende Formschlussverbindung auszubilden, die zudem ausreichend stark und stabil ausgebildet ist, um das gesamte rohrförmige Bauteil mittels der an der Tragstruktur aufgehängten Trennschweißanordnung anzuheben und in geeigneter Weise zu positionieren.

Schließlich ist mittel- oder unmittelbar an der Befestigungsanordnung eine Manipulatoreinheit angebracht, vorzugsweise in Form einer 6-achsigen, offenen kinematischen Kette, bspw. in der Art eines vertikalen Knickarmroboters, mindestens jedoch in Form einer 3-achsigen kinematischen Kette, an dessen frei positionierbarem Manipulatorende ein Trennwerkzeug angebracht ist.

Im festen Fügezustand befindet sich die auf dem oberen Rohrende aufsitzende Befestigungsanordnung sowie das über die Manipulatoreinheit verbundene Trenn-Schweißwerkzeug in einem festen, definierten Raumbezug zum rohrförmigen Bauteil, d.h. dem Bauteil und der Trennschweißanordnung sind ein gemeinsames Koordinatensystem zugeordnet. Innerhalb des gemeinsamen Koordinatensystems lässt sich das Trennwerkzeug exakt längs einer radial außerhalb des rohrförmigen Bauteils vorgegebenen Trajektorie, die der Trennlinie entspricht, längs der das rohrförmige Bauteil in zwei separate Bauteil-Teile trennbar ist, relativ zum rohrförmigen Bauteil führen. In aller Regel entspricht das aus der Bauteiltrennung resultierende obere Bauteil-Teil, an das die Befestigungsanordnung der Trennschweißanordnung gefügt ist, dem Gutteil und das untere, auf dem mobilen Transportmodul aufsitzende Bauteil-Teil, dem Schlechtteil, das es zu verbringen gilt. Zur lösbar festen Anbindung des rohrförmigen Bauteils auf der Aufnahmeplattform des mobilen Transportmoduls, das vorzugsweise in Form eines Niederflur-Transportfahrzeuges oder einer durch eine mobile Staplereinheit handhabbaren Vorrichtung ausgebildet ist, umfasst die Rohrspannvorrichtung gemäß der Erfindung wenigstens zwei längs der Aufnahmeplattform beweglich und arretierbar angeordnete Spannblöcke, die derart angeordnet und ausgebildet sind, so dass die Spannblöcke innenliegend zum vertikal orientierten, sich mittel- oder unmittelbar auf der Aufnahmeplattform abstützenden, rohrförmigen Bauteil längs dessen Innenwand gleich verteilt unter Ausübung von radial nach außen auf die Innenwand orientierter Spannkräfte mit dem rohrförmigen Bauteil in Eingriff bringbar sind. Alternativ oder in Kombination können die Spannblöcke ebenso radial außenliegend zum vertikal orientierten, sich mittel- oder unmittelbar auf der Aufnahmeplattform abstützenden, rohrförmigen Bauteil längs dessen Außenwand gleich verteilt unter Ausübung von radial nach innen auf die Außenwand orientierter Spannkräfte mit dem rohrförmigen Bauteil in Eingriff gebracht werden.

Die Spannblöcke werden vorzugsweise pneumatisch, hydraulisch oder elektromotorisch gegen die Innen- bzw. Außenwand des auf der Aufnahmeplattform aufsitzenden, vertikal orientierten rohrförmigen Bauteils kraftbeaufschlagt verspannt. Vorzugsweise sind drei, vier oder mehr derartiger Spannblöcke zur Gewährleistung eines sicheren, festen Sitzes des zum Teil mehrere Meter hoch messenden, rohrförmigen Bauteils auf dem mobilen Transportmodul vorgesehen.

Die längs der Aufnahmeplattform jeweils bidirektional verschiebbar bzw. verfahrbar angeordneten Spannblöcke weisen erfindungsgemäß jeweils vertikal verstellbare Abstützstrukturen auf, die derart ausgebildet und angeordnet sind, dass die Abstützstruktur jedes einzelnen Spannblockes jeweils in lokalen Eingriff mit der umlaufenden Stirnkante des unteren Rohrendes bringbar ist. Hierzu sind die Abstützstrukturen vorzugsweise gabelförmig ausgebildet und umfassen auf diese Weise den unteren, stirnseitigen Rand des rohrförmigen Bauteils lokal bzw. abschnittsweise. Durch die voneinander unabhängige vertikale Auslenkbarkeit jeder einzelnen Abstützstruktur ist es möglich rohrförmige Bauteile mit einem unteren Rohrende aufzunehmen und abzustützen, das über eine beliebig geformte stirnseitig endende Rohrkantenkontur verfügt. Weitere Einzelheiten hierzu sind der Beschreibung unter Bezugnahme auf die konkreten Ausführungsbeispiele zu entnehmen.

In einer weiteren bevorzugten Ausführungsform ist an der Aufnahmeplattform der mobilen Transporteinheit zusätzlich zur Rohrspannvorrichtung eine vertikal verfahrbare Abstützeinheit angebracht, die vorzugsweise mittig bzw. zentrisch zwischen den wenigstens zwei vorzugsweise drei, vier oder mehr Spannblöcken angeordnet ist. Die vertikal verfahrbare Abstützeinheit ist vorzugsweise teleskopartig auslenkbar ausgebildet und verfügt über eine obere Aufnahme bzw. Auflageplattform, auf der die Trennanordnung, zumindest im Zustand der festen Fügung zwischen der Befestigungsanordnung und dem rohrförmigen Bauteil aufliegt. Durch die raumfeste Auflage der Trennanordnung auf der vertikal verfahrbaren Abstützeinheit ist eine stabile, raumfeste Positionierung der Trennanordnung gewährleistet, insbesondere auch zu jenem Zeitpunkt, bei dem mittels des Trennwerkzeuges das rohrförmige Bauteil in zwei separate Bauteil-Teile separiert wird. Mit Hilfe der vertikal verfahrbaren Abstützeinheit wird vermieden, dass sich das obere separierte Bauteil-Teil undefiniert am unteren Bauteil-Teil abstützt oder dieses beschädigt. Vielmehr verbleibt das obere Bauteil-Teil durch die feste Fügung mit der Trennanordnung auch nach der trennschweißbedingten Separierung raumfest und über eine trennschweißbedingte Trennfuge vom unteren Bauteil-Teil beabstandet.

Nach erfolgter Trennung kann das obere Bauteil-Teil vermittels der an der Tragstruktur angebrachten Trennanordnung vom Transportmoduls abgehoben und zu einem beliebigen Ort verbracht werden, beispielsweise zu Zwecken einer Zwischenlagerung oder einer Weiterverarbeitung im Rahmen einer schweißtechnischen Fügung an ein geeignet gelagertes und entsprechend vorkonfektioniertes Basisrohr. In gleicher Weise kann das auf dem mobilen Transportmodul aufsitzende untere Bauteil-Teil verbracht, entsorgt oder einer Wiederverwendung zugeführt werden.

Im Falle lediglich einer vertikalen Auslenkung der Trennanordnung bewegt sich das das Schlechtteil tragende mobile Transportmodul fort, so dass ein zweites mobiles, vorzugsweise baugleiches Transportmodul zu Zwecken der Aufnahme des Gutteils dienen kann.

Nähere Erläuterungen zur bevorzugten Ausgestaltung der Trennanordnung sind der weiteren Beschreibung unter Bezugnahme auf ein bevorzugtes Ausführungsbeispiel zu entnehmen.

Mit Hilfe des lösungsgemäßen Systems zum Trennen eines rohrförmigen Bauteils ist ein neuartiges Verfahren zum Trennen eines rohrförmigen Bauteils sowie für die nachfolgende Ausbildung bzw. Schaffung eines Tragwerkes insbesondere in Form von Offshore- oder Brückenkonstruktionen möglich. Das neuartige Verfahren zeichnet sich dadurch aus, dass in einem ersten Schritt ein rohrförmiges Bauteil mit vertikal orientierter Rohrlängserstreckung auf einer Aufnahmeplattform eines mobilen Transportmoduls angeordnet wird, so dass das rohrförmige Bauteil mobil längs einer Fertigungsebene beliebig positionierbar ist.

Die Fertigungsebene überragend ist eine Tragstruktur angebracht, die beispielsweise in Form eines Traggerüstes oder die in Art einer Krananlage ausgebildet ist, an der eine Trennanordnung zumindest vertikal anhebbar und absenkbar, vorzugsweise räumlich frei positionierbar angeordnet ist. Der Begriff "räumlich frei positionierbar" bedeutet eine Auslenkung der Trennanordnung längs dreier orthogonal zueinander orientierter Raumachsen. Im Weiteren wird das rohrförmige Bauteil mittels der mobilen Transportplattform sowie Trennanordnung relativ zueinander derart ausgerichtet, so dass die Trennanordnung am oberen Rohrende des vertikal auf dem Transportmobil aufsitzenden rohrförmigen Bauteils aufgesetzt und am oberen Rohrende mit dem rohrförmigen Bauteil unter Ausbildung einer Formschlussverbindung lösbar fest verbunden wird.

Nach Herstellung der raumfesten Verbindung zwischen der Trennanordnung und dem rohrförmigen Bauteil wird das rohrförmige Bauteil längs einer vorgegebenen Trennkurve zum Erhalt voneinander separierter Bauteil-Teile, in Form eines unteren und eines oberen Bauteil-Teils, mittels wenigstens eines an der Trennanordnung beweglich angebrachten Trennwerkzeuges, separiert.

Der Trennvorgang erfolgt derart, dass das Trennwerkzeug radial außen zum rohrförmigen Bauteil angeordnet und längs der Trennkurve um das rohrförmige Bauteil geführt wird.

Um zu vermeiden, dass während und nach dem Durchtrennen das obere Bauteil-Teil relativ zum unteren Bauteil-Teil verkippt und/oder wenigstens um ein Maß der sich zwischen beiden Bauteil-Teilen ergebenden Trennfuge absenkt und auf diese Weise die sich ausbildende Schneidkontur beschädigt, stützt sich die Trennanordnung und mit ihr form- und kraftschlüssig das obere Bauteil-Teil verbunden, separat zum rohrförmigen Bauteil gegenüber dem mobilen Transportmodul ab und sichert das obere Bauteil-Teil vor einem undefinierten Absenken.

Nach einer vollständigen Durchtrennung wird das obere Bauteil-Teil mittels der frei positionierbaren Trennschweißanordnung abgehoben und eine an eine entsprechende Stelle verbracht. Das auf dem mobilen Transportmodul aufliegende untere Bauteil-Teil kann in gleicher Weise verfahren und entsorgt bzw. einer Wiederverwendung zugeführt werden.

Das lösungsgemäße System lässt sich in vorteilhafter Weise neben der Durchführung von Trennaufgaben an rohrförmigen Bauteilen auch zur Nachbearbeitung diesbezügliche Bauteile anwenden. Durch entsprechenden Austausch des Trennwerkzeuges durch ein Schleifwerkzeug können Schleifarbeiten bspw. an Schweißnahtübergängen durchgeführt werden, insbesondere am Übergang der Schweißnaht zum Grundwerkstoff des Bauteils, vorzugsweise zum Schleifen des Nahtübergangs der Decklage zur Reduzierung von Kerbwirkungen und einer damit verbundenen Erhöhung des Widerstandes der Schweißverbindung gegenüber dynamischen Belastungen. Ebenso ist es möglich, den Schleifprozess zur Bearbeitung der Wurzel- und Fülllagen, z.B. zur Beseitigung von Fehlstellen o.ä. innerhalb der Schweißnaht, einzusetzen.

### Kurze Beschreibung der Erfindung

Die Erfindung wird nachstehend ohne Beschränkung des allgemeinen Erfindungsgedankens anhand von Ausführungsbeispielen unter Bezugnahme auf die Zeichnungen exemplarisch beschrieben. Es zeigen:
- Fig. 1: Gesamtansicht auf das lösungsgemäße System,
- Fig. 2: mobiles Transportsystem,
- Fig. 3: Detaildarstellung zur Illustration der an dem rohrförmigen Bauteil angebrachten Trennschweißanordnung detaillierte Gesamtansicht,
- Fig. 4: Gesamtsystem sowie
- Fig. 5a-d: Sequenzbilddarstellung zur Durchführung eines Trennschweißprozesses an einem rohrförmigen Bauteil.

### Wege zur Ausführung der Erfindung, gewerbliche Verwendbarkeit

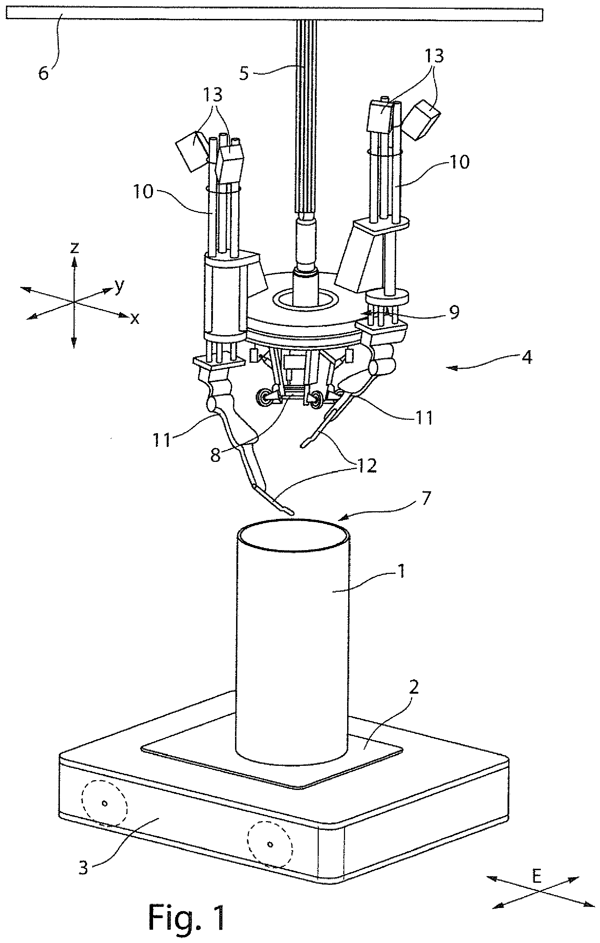

Figur 1 zeigt in perspektivischer Darstellung eine schematisierte Ansicht des lösungsgemäßen Systems zum Trennen eines rohrförmigen Bauteils 1, das in Figur 1 ein gerader Stahlzylinder ist, der auf einer horizontal orientierten Aufnahmeplattform 2 eines mobilen Transportmoduls 3 aufliegt, das beliebig längs einer Produktionsebene E verfährt. Das in Figur 1 illustrierte mobile Transportmodul 3 stellt vorzugsweise ein Niederflur-Transportfahrzeug dar. Alternativ ist es möglich, das mobile Transportmodul 3 auch durch anderweitige, Lasten tragende, untersatzartig ausgebildete Vehikel bzw. in der Produktionsebene handhabbare Vorrichtungen auszugestalten.

Zudem sieht das lösungsgemäße System eine zum mobilen Transportmodul 3 sowie auch zum rohrförmigen Bauteil 1 separate Trennanordnung 4 vor, die zum Zweck der Prozessvorbereitung bzw. -einrichtung über eine Aufhängung 5, vorzugsweise über Seilwinden, an einer Tragstruktur 6 zumindest vertikal anhebbar und absenkbar gelagert ist. Die in Figur 1 stark schematisiert dargestellte Aufhängung 5 ist stellvertretend für jede denkbare Form einer mechanischen Verbindung zwischen dem Trennmodul 4 und der Lastaufnehmenden Tragstruktur 6 zu verstehen. Die Tragstruktur 6 kann in Form eines sich auf der Produktionsebene E eigenstabil abstützenden Gittergerüstes ausgebildet sein. Gleichwohl ist es möglich das Gewicht der Trennanordnung 4 auch über eine stationäre oder mobile Krananlage abzufangen, die zudem vertikale Bewegungen, vorzugsweise eine räumlich freie Positionierung der Trennanordnung 4 ermöglicht.

Durch die Möglichkeit einer mobilen Positionierung des rohrförmigen Bauteils 1 längs der Produktionsebene E mittels des Transportmoduls 3 sowie der zumindest vertikal variabel anordenbaren Trennanordnung 4 ist es möglich, das rohrförmige Bauteil 1 sowie die Trennanordnung 4 in eine vertikal überlappende Position überzuführen, in der die Trennanordnung 4 vertikal in Richtung des oberen offenen Rohrendes 7 des vertikal orientierten rohrförmigen Bauteils 1 abgesenkt wird.

Die Trennanordnung 4 verfügt über eine Befestigungsanordnung 8, die unterhalb einer Auflageplattenanordnung 9 der Trennanordnung 4 angeordnet ist und in das Rohrinnere des rohrförmigen Bauteils 1 einmündet, während die Auflagenplattenanordnung 9 am kreisförmig stirnseitig endenden oberen Rohrende 7 aufliegt.

Die Trennanordnung 4 fügt sich lösbar fest im Wege einer Formschlußverbindung mittels der Befestigungsanordnung 8 an die Innenwand des rohrförmigen Bauteils 1. Längs des Umfangsrandes der Auflageplattenanordnung 9 sind zwei Linearanordnungen 10 angebracht, die im gefügten Zustand der Trennanordnung 4 am rohrförmigen Bauteil 1 vertikal absenkbar bzw. anhebbar auslenkbar gelagert sind. Am unteren Ende jeder Lineareinheit 10 ist jeweils eine Manipulatoreinheit 11 in Form einer mindestens 3-achsigen kinematischen Kette, vorzugsweise jedoch in Form einer sechsachsigen offenen kinematischen Kette, bspw. in Art eines vertikalen Knickarmroboters angebracht, an dessen Manipulatorende ein Trennwerkzeug 12 vorgesehen ist.

Die Lineareinheiten 10 sind samt der jeweils daran befestigten Manipulatoreinheit 11 und dem Trennwerkzeug 12 drehbar um die Auflageplattenanordnung 9 und somit drehbar um den Außenumfang des rohrförmigen Bauteils 1 gelagert.

Durch das Vorsehen von zwei Trenngeräten 12 kann die Dauer eines Trennprozesses halbiert werden, was sich insbesondere in Fällen als vorteilhaft auszeichnet, in denen rohrförmige Bauteile 1 mit großen Wandstärken zu trennen sind.

Zur Prozessgasversorgung jeweils eines Trenngerätes 12 sieht die in Figur 1 illustrierte Ausführungsform jeweils wenigstens ein Versorgungsmodul 13 vor, in dem für den Schneidprozess relevante Komponenten enthalten sind, wie beispielsweise eine Steuereinheit, eine elektrische Energieversorgungseinheit sowie wenigstens ein Reservoir für den Trennschweißprozess relevante Materialien, umfassend wenigstens das Prozessgas.

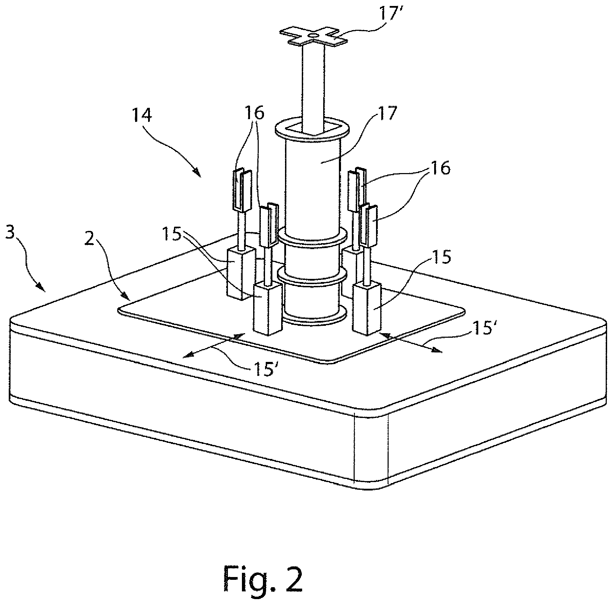

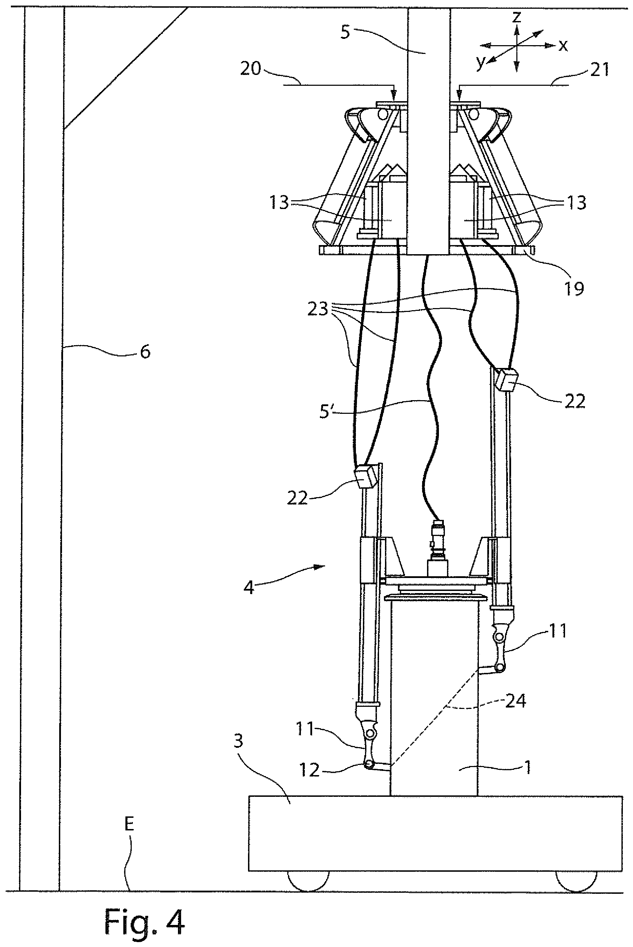

In Figur 2 ist ein Ausführungsbeispiel für die Ausgestaltung eines mobilen Transportmoduls 3 illustriert. Als fahrbare Basis dient vorzugsweise ein Niederflur-Transportfahrzeug das eine ebene, horizontale Aufnahmeplattform 2 besitzt, an der eine Rohrspannvorrichtung 14 angebracht ist, die im Ausführungsbeispiel gemäß Figur 4 vier Spannblöcke 15 umfasst. Jeder der einzelnen Spannblöcke 15 ist längs einer Linearachse 15' verschiebbar sowie auch relativ zur Aufnahmeplattform 2 arretierbar. Zur lösbar festen Fixierung eines rohrförmigen Bauteils 1 werden die Spannblöcke 15 Presskraft beaufschlagt in Anlage an die Innenwand des rohrförmigen Bauteils 1 gebracht und gegenüber dieser verspannt. Zur Auslenkung der einzelnen Spannblöcke 15 längs ihrer Verschiebungsachsen 15' und einer damit möglichen Verspannung des rohrförmigen Bauteils 1 zur Befestigung am mobilen Transportmodul 3 sind die einzelnen Spannblöcke 15 elektromotorisch, pneumatisch oder hydraulisch auslenkbar gelagert.

Zusätzlich verfügt jeder einzelne Spannblock 15 über eine vertikal auslenkbare Abstützstruktur 16, die vorzugsweise gabelförmig zur lokalen Umfassung und stirnseitigen Aufnahme der Rohrendkantenstruktur dient.

Schließlich sieht das mobile Transportmodul 3 eine vertikal verfahrbare Abstützeinheit 17 mit einer Auflageplattform 17' vor, die zur Aufnahme und Abstützung der Trennschneidvorrichtung 4 dient. So verhindert die in der Höhe individuell anpassbare Aufnahmeplattform 17' ein Absenken der Trennschneidanordnung während und nach der Erzeugung einer gewünschten Schnittkontur längs des Umfangsrandes des rohrförmigen Bauteils. Vorzugsweise sieht die Abstützeinheit 17 einen Spindel-angetriebenen, teleskopartig ausgebildeten Stützmechanismus zur vertikalen Höhenanpassung der Aufnahmeplattform 17' vor.

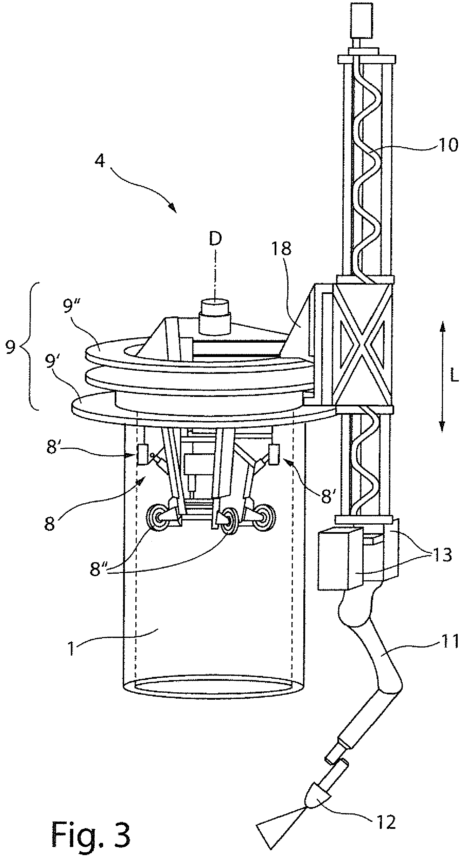

Figur 3 illustriert eine schematische Darstellung der fest mit einem rohrförmigen Bauteil 1 gefügten Trennschneidanordnung 4. Zur sicheren, lösbar festen Lagerung der Trennschneidanordnung 4 ausschließlich am oberen Ende des rohrförmigen Bauteils 1 weist die in das Rohrinnere hineinragende Befestigungsanordnung 8 motorisch angetriebene, radial gegen die Innenwand des rohrförmigen Bauteils 1 anpressbare Klemmbacken 8' auf, die die Befestigungsanordnung 8 und somit die gesamte Trennschneidanordnung 4 zentrisch am rohrförmigen Bauteil 1 fixieren. Insgesamt weist die Befestigungsanordnung 8 drei, vier oder mehr derartiger Klemmbacken 8' auf. Am unteren Ende der Befestigungsanordnung 8 vorgesehene, frei drehbar angebrachte Rollen 8" sorgen für ein erleichtertes und insbesondere schadloses Einfädeln der Befestigungsanordnung 8 in das obere Rohrende des rohrförmigen Bauteils 1.

Die Auflageplattenanordnung 9 sieht eine untere Auflageplatte 9' vor, die in unmittelbaren stirnseitigem Kontakt mit dem oberen Ende des rohrförmigen Bauteils 1 tritt. Drehbar zur unteren Auflageplatte 9' ist ein Trägerringmodul 9" vorgesehen, das motorisch um die Drehachse D angetrieben wird. Fest mit dem Trägerringmodul 9" sind jeweils über eine Haltevorrichtung 18 die Lineareinheiten 10 verbunden, die motorisch längs der Linearachse L, die im gefügten Zustand der Trennanordnung 4 mit dem vertikal orientierten dem rohrförmigen Bauteil 1 der Vertikalachse entspricht, verfahrbar sind. Am unteren Ende der Lineareinheit 10 ist die Manipulatoreinheit 11 angebracht, an deren Manipulatorende das Trennwerkzeug 12 räumlich frei positionierbar angebracht ist.

In dem in Figur 3 gezeigten Ausführungsbeispiel sind sowohl am oberen als am unteren Ende der Lineareinheit 10 entsprechende Versorgungsmodule 13 vorgesehen, um den Trennvorgang kontrolliert und energetisch unterstützt durchführen zu können.

In der Darstellung gemäß Figur 4 ist der Zustand illustriert, in dem die Trennschweißanordnung 4 fest am oberen Rohrende 7 des rohrförmigen Bauteils 1 gefügt ist. Im Falle der Figur 4 ist die Trennanordnung 4 über ein Verbindungsmittel 5' an einem Trägermodul 19 angebracht, auf dem, wie die weiteren Ausführungen zeigen, für den Trennprozeß erforderliche Versorgungskomponenten untergebracht sind. Das Trägermodul 19 ist über die Aufhängung 5 mit der Trägerstruktur 6 verbunden.

Die Aufhängung 5 sowie das Verbindungsmittel 5' gewährleisten eine räumlich freie Positionierung der Trennvorrichtung 4 längs der in Figur 4 markierten orthogonal zueinander orientierten Raumrichtungen x, y, z. In vorteilhafter Weise ist die Aufhängung 5 zur Führung bzw. Positionierung des Modulträgers 19 und der an diesem über das Verbindungsmittel 5' gekoppelten Trennanordnung 4 über eine Schienenaufhängung mit der Tragstruktur 6 verbunden, die eine Auslenkung der Aufhängung 5 längs der angegebenen x- und y-Richtung gewährleistet. Zur räumlichen Positionierung der Trennanordnung 4 längs der vertikalen z-Achse eignen sich zur Ausbildung des Verbindungsmittels 5' Teleskopmechanismen, Zylinderhubeinheiten, Spindelantriebe, Seilzugantriebe, um nur einige zu nennen.

Auf dem Modulträger 19 sind sämtliche für den Trennprozess relevante Logistikkomponenten bzw. Versorgungsmodule 13 untergebracht. Diese betreffen für jedes Trennwerkzeug 12 jeweils eine Steuer- und Energieeinheit sowie ein Reservoir für Prozessgas. Die Energieversorgung sowie Zuleitung entsprechender Steuersignale an die auf den Modulträger 19 aufsitzenden Versorgungsmodule 13 erfolgt vorzugsweise über eine externe Kabelzuführung 20, die über eine zentral im Bereich des Modulträgers 19 angeordnete Schleifringkupplung (nicht dargestellt) ankoppelt. Bedarfsweise ist eine weitere, externe Zuführungsleitung 21 vorgesehen, über die Prozessgas zugeführt wird. Die Anbindung des Prozessgases an die auf dem Modulträger 19 aufsitzenden Versorgungsmodule 13 erfolgt ebenfalls über eine fluiddichte Schleifringkupplung (nicht dargestellt). Auf diese Weise können externe Energiequellen sowie auch Gasreservoirs, beispielsweise in Form von Gasflaschen an leicht zugänglichen Stellen im Bereich der Produktionsebene E bevorratet und entsprechend genutzt werden.

Zwischen den Versorgungsmodulen 13 und entsprechenden Verbindungseinheiten 22 am oberen Ende der Lineareinheiten 10 sind flexibel ausgebildete Verbindungsleitungen 23 vorgesehen, über die letztlich die Trennwerkzeuge 12 mit Energie sowie auch das für den Trennprozess erforderliche Prozessgas versorgt werden.

Aufgrund der mittels des Trägerringmoduls 9" drehbaren Anordnung der Trennwerkzeuge 12 um die Rohrlängsachse des rohrförmigen Bauteils 1 ist es erforderlich, die auf dem Modulträger 19 angeordneten Versorgungsmodule 13 gleichförmig zur Drehbewegung der Trennwerkzeuge 12 um die Rohrlängsachse mitzudrehen, um so verhindern, dass die Verbindungsleitungen 23 verdrillen und somit Schaden nehmen.

Im Übrigen ist die vorstehend erläuterte Trennanordnung 4 mit Ausnahme der speziellen Ausbildung des Trennwerkzeuges 12 in einer zum Zeitpunkt dieser Anmeldung nicht veröffentlichten Patentanmeldung PCT/EP2016/055623 sowie DE 10 2015 206 044.6 ausführlich erläutert. Die in den vorstehenden beiden Anmeldungen beschriebene Schweißanordnung dient dem Verbinden zweier Rohrstutzen mit Hilfe eines Schweißwerkzeuges. Mit Ausnahme des dort beschriebenen Schweißwerkzeuges ist die konstruktive Ausbildung ansonsten identisch mit der im Rahmen dieser Anmeldung offenbarten Trennvorrichtung. In diesem Zusammenhang wird auf den Offenbarungsgehalt der vorstehenden beiden Druckschriften vollumfänglich Bezug genommen.

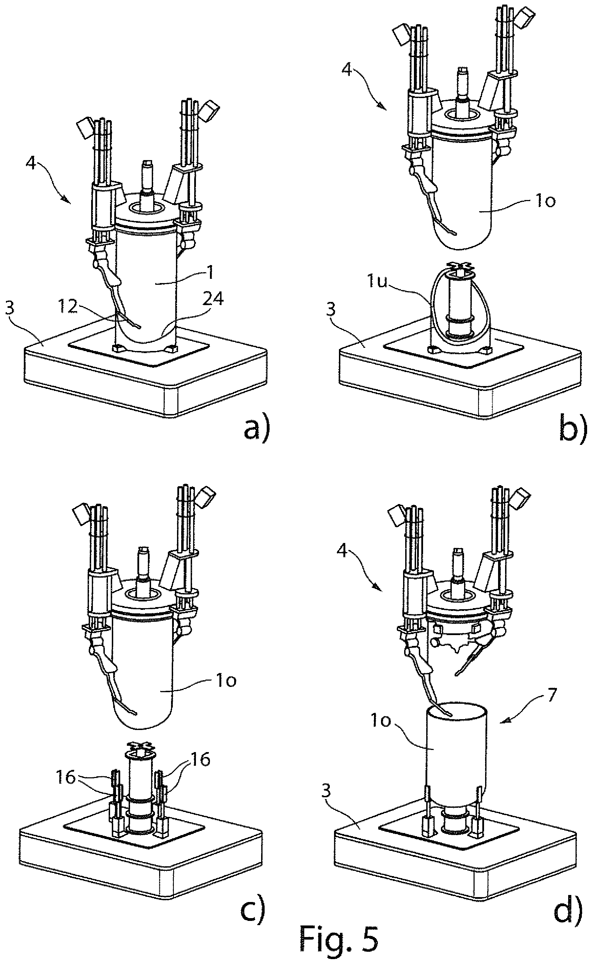

Die Figuren 5a bis d beschreiben in Form von Sequenzbildern den Trennvorgang eines rohrförmigen Bauteils mit Hilfe des lösungsgemäßen Systems.

Dem in Figur 5a gezeigten Prozesszustand, bei dem das rohrförmige Bauteil 1 bereits auf dem mobilen Transportmodul 3 in vertikaler Ausrichtung lösbar fest angeordnet ist und die Trennanordnung 4 auf dem oberen Rohrende des rohrförmigen Bauteils aufsitzt und sich mittels der Befestigungsanordnung raumfest an das rohrförmige Bauteil 1 anfügt, geht die Beschickung des mobilen Transportmoduls 3 mit dem rohrförmigen Bauteil 1 voraus. Hierzu wird das rohrförmige Bauteil 1 beispielsweise mit Hilfe einer Krankanlage (nicht dargestellt) gegenüber der Rohrspannvorrichtung auf der Aufnahmeplattform 2 des Transportmoduls 3 positioniert und abgesenkt. Wie vorstehend beschrieben wird das rohrförmige Bauteil 1 mittels der Rohrspannvorrichtung fest am mobilen Transportmodul fixiert. Des Weiteren gilt es, das mobile Transportmodul 3 gegenüber der Trennanordnung 4 zu positionieren. Gleichfalls gilt es, die Trennanordnung 4 in geeigneter Weise koaxial mit dem auf dem mobilen Transportmodul 3 aufsitzenden rohrförmigen Bauteil 1 zu zentrieren und entsprechend abzulassen.

Das Ablassen der Trennanordnung 4 auf das obere Rohrende erfolgt mit Hilfe einer nicht weiter in Figur 5 illustrierten Aufhängung, beispielsweise in Form von Seilwinden, wobei die Trennschweißanordnung 4 auf der in Figur 2 erläuterten Aufnahmeplattform 17' abstützend zur Anlage kommt. Zu Zwecken einer Arretierung und Fixierung der Trennschweißanordnung 4 gegenüber dem rohrförmigen Bauteil 1 werden die in Figur 3 erläuterten Klemmbacken 8' radial nach außen gefahren.

Nach entsprechender Fixierung der Trennanordnung 4 am rohrförmigen Bauteil 1 erfolgt die Durchführung des Trennprozesses, bei dem die Trennwerkzeuge 12 in Umfangsrichtung der äußeren Mantelfläche des rohrförmigen Bauteils 1 längs einer vorgegebenen Trenntrajektorie 24, siehe auch die gestrichelte Linie auch in Figur 4, verfahren werden. Je nach Komplexität der Trajektorie bzw. der zu schneidenden Kontur erfolgt das Überfahren der Trenntrajektorie 24 mittels der Trennwerkzeuge 12 mehrfach.

Nach Beenden des Trennprozesses werden die Trennanordnung 4 sowie das obere Bauteil-Teil 1o mittels der Aufhängung angehoben. Das untere Bauteil-Teil 1u verbleibt auf dem mobilen Transportmodul 3 und wird entsprechend verbracht und einer möglichen Wiederverwertung zugeführt, siehe hierzu Figur 5b.

In Figur 5c erfolgt die Abstellung des oberen Bauteil-Teils 1o, dessen unteres Rohrende der vorgegebenen Trenntrajektorie entspricht und somit eine von der ursprünglichen Kreisform abweichende untere Stirnkantenkontur besitzt. Entsprechend der Stirnkantenkontur werden die vertikal verstellbaren Abstützstrukturen 16 individuell vertikal ausgelenkt, so dass die untere Stirnkante des oberen Bauteil-Teils 1o in die gabelförmigen Abstützstrukturen 16 lokal einmündet, um eine vertikale stabile Lagerung des oberen Bauteil-Teils 1o zu gewährleisten.

In der in Figur 5d illustrierten Sequenz ist die Befestigungsanordnung der Trennanordnung 4 gelöst und vom oberen Rohrende 7 getrennt. Nach entsprechender vertikaler Beabstandung der Trennanordnung 4 zum rohrförmigen Bauteil 1o wird das Bauteil 1o mit Hilfe des mobilen Transportmoduls 3 individuell verbracht.

Mit dem lösungsgemäßen System zum Trennen eines rohrförmigen Bauteils ist es möglich, beliebige Zuschnittaufgaben an rohrförmigen Bauteilen mit beliebigem Durchmesser und beliebiger Ausgangslänge durchzuführen. Insbesondere sind die Durchführung von Konturschnitten sowie die Anbringung einer Schweißnahtvorbereitung an Rohren bzw. Rohrstutzen, welche zu Rohrkonten weiterverarbeitet werden sollen, möglich.

Durch den Einsatz eines mobilen Transportmoduls in Verbindung mit der räumlich positionierbaren Trennanordnung entsteht ein mobiles und kompaktes Gesamtsystem, welches mit geringem Aufwand an beliebigen Produktionsstandorten aufgebaut und dort in Betrieb genommen werden kann. Ein Baustelleneinsatz der Anlagentechnik ist durchaus denkbar. Ferner ist es möglich, das vorstehend für den Trennprozess erläuterte System durch entsprechenden Austausch des Trennwerkzeuges durch ein Schweißwerkzeug bzw. Anordnung weiterer Lineareinheiten 10 in Kombination mit Manipulatoren 11 und einem Schweißwerkzeug auf dem Trägerringmodul 9" zum Fügen zweier rohrförmiger Bauteile einzusetzen.

Ebenfalls ist möglich, bei geeigneter Vorgabe der Trenntrajektorie innerhalb eines vertikal auf dem mobilen Transportmodul aufsitzenden Basisrohr eine lokale Lochausnehmung in die Mantelfläche des Basisrohres einzubringen. Hierzu gilt es jedoch, das vom Basisrohr separierte Segment mit einer zusätzlichen, geeignet ausgebildeten Haltevorrichtung zu stützen, um Beschädigungen an der Schnittkontur am Basisrohr zu vermeiden. Eine derartige Haltevorrichtung ist vorzugsweise im Innenbereich des Basisrohres im Bereich der vertikal verfahrbaren Abstützeinheit 17 vorzusehen.

In einer weiteren bevorzugten Ausführungsform sind sowohl an der Trennanordnung als auch am Transportmodul Messeinrichtungen angebracht, mit denen die Kontur des zu trennenden rohrförmigen Bauteils im Vorfeld bzw. während des Trennprozesses erfasst und die Trenntrajektorie ideal angepasst werden kann. Des Weiteren kann die Trennqualität sowie auch die Maßhaltigkeit der Trenntrajektorie überprüft werden. Hierzu sind vorzugsweise berührungslos arbeitende Sensoren vorzugsweise am Ende der Manipulatoreinheiten 10 und/oder im Bereich der Rohrspannvorrichtung 14 angebracht. Auf diese Weise ist eine online-Überwachung des Trennvorganges möglich, bei dem erforderliche Korrekturen insitu vorgenommen werden können.

Die Messeinrichtungen zur berührungslosen Erfassung des zu trennenden rohrförmigen Bauteils im Vorfeld des eigentlichen Trennvorganges dienen vornehmlich zur genauen Geometriebestimmung des Bauteils selbst. So werden auch häufig Rohre mit einem von einer Kreisform abweichenden Rohrquerschnitt, bspw. mit einem elliptischen Rohrquerschnitt, im Wege eines Fügevorganges gefügt. Hierzu gilt es die Fügekontur derartiger Rohre entsprechend auszubilden. Nicht nur bei im Querschnitt elliptischen Rohren, aber vornehmlich bei diesen Rohrtypen, weichen die Querschnittsgeometrien von einem Idealmaß ab, so dass sich beim Trennvorgang unter Vorgabe einer numerischen Standardtrajektorie, längs der das Trennwerkzeug ausgelenkt wird, eine Schnittkontur einstellt, die beim späteren Fügen eines zu intolerablen Spaltmaßabweichungen führt. Um derartigen Spaltmaßabweichungen zu begegnen wird vor dem Trennen das jeweils zu bearbeitende Rohrteil genauestens vermessen. Dies gilt sowohl für das Basisrohr, in dessen Rohrmantel eine bestimmte Ausnehmung einzubringen ist, sowie für einen Rohrstutzen, dessen Rohrende eine an die Umfangskontur der Ausnehmung im Basisrohr exakt angepasste Fügekontur aufweisen muss, die durch die Trenntrajektorie vorgegeben ist.
Die Bestimmung der exakten Trenntrajektorie erfolgt daher auf der Grundlage der jeweils mit der Messeinrichtung aktuell vermessenen Rohrgeometrie.

### Bezugszeichenliste

- 1: Rohrförmiges Bauteil
- 2: Aufnahmeplattform
- 3: Mobiles Transportmodul
- 4: Trennanordnung
- 5: Aufhängung
- 5': Verbindungsmittel
- 6: Tragstruktur
- 7: Oberes Rohrende
- 8: Befestigungsanordnung
- 8': Klemmbacken
- 8": Rollen
- 9: Auflageplattenanordnung
- 9': Untere Auflageplatte
- 9": Trägerringmodul
- 10: Lineareinheit
- 11: Manipulator
- 12: Trennwerkzeug
- 13: Versorgungsmodul
- 14: Rohrspannvorrichtung
- 15: Spannblock
- 15': Linearachse
- 16: Vertikal verstellbare Abstützstruktur
- 17: vertikal verfahrbare Abstützeinheit
- 17': Aufnahmeplattform
- 18: Haltevorrichtung
- 19: Modulträger
- 20: Kabelzuführung
- 21: Prozessgaszuführung
- 22: Verbindungseinheit
- 23: Verbindungsleitungen
- 24: Trenntrajektorie
- E: Produktionsebene, Boden
- D: Drehachse
- x,y,z: Orthogonal zueinander orientierte Raumachsen
- L: Linearachse

## Patentansprüche

1. System zum Trennen eines rohrförmigen Bauteils (1), das für die Ausbildung eines Tragwerkes geeignet ist und über eine Rohrlängserstreckung mit beidseitig offen ausgebildeten Rohrenden (7) verfügen kann, mit
- einem mobilen Transportmodul (3), das eine Aufnahmeplattform (2) mit einer an unterschiedliche Rohrdurchmesser adaptierbare Rohrspannvorrichtung (14) aufweist, die zur Aufnahme und stabilen Lagerung des rohrförmigen Bauteils (1) derart ausgebildet ist, so dass ein erstes Rohrende des rohrförmigen Bauteils (1), dessen Rohrlängsachse vertikal orientiert ist, in lösbar festen Eingriff mit der Rohrspannvorrichtung (14) bringbar ist, und
- einer Trennanordnung (4) die
- an einer Tragstruktur (6) zumindest anhebbar und absenkbar angebracht ist,
- eine Befestigungsanordnung (8) geeignet zum lösbar festen Fügen an dem, dem ersten Rohrende abgewandten zweiten Rohrende eines auf dem Transportmodul aufsitzenden und in festem Eingriff mit der Rohrspannvorrichtung vertikal stehenden, rohrförmigen Bauteils (1) aufweist sowie
- wenigstens eine mittel- oder unmittelbar an der Befestigungsanordnung angebrachte Manipulatoreinheit (11) mit einem frei positionierbaren Manipulatorende vorsieht, an dem ein Trennwerkzeug (12) angebracht ist, das längs einer radial außerhalb des rohrförmigen Bauteils vorgebbaren Trajektorie relativ zum rohrförmigen Bauteils führbar ist,
**dadurch gekennzeichnet, dass** die Rohrspannvorrichtung wenigstens zwei längs der Aufnahmeplattform (2) angeordnete Spannblöcke (15) umfasst, die innen- und/oder außenliegend zu einem vertikal orientierten, sich mittel- oder unmittelbar auf der Aufnahmeplattform (2) abstützenden, rohrförmigen Bauteil (1) gleichverteilt längs dessen Innenwand oder Außenwand angeordnet sind und derart ausgebildet sind, dass die Spannblöcke (15) unter Ausübung von radial nach aussen und/oder innen auf die Innen- und/oder Außenwand orientierten Spannkräften mit dem rohrförmigen Bauteil (1) in Eingriff bringbar sind, und, dass die Spannblöcke jeweils eine vertikal verstellbare Abstützstruktur (16) aufweisen, die derart ausgebildet und angeordnet ist, dass die Abstützstruktur jeweils in Eingriff mit einem lokalen Abstützbereich längs einer dem vertikal orientierten, rohrförmigen Bauteil (1) zugeordneten Stirnseite des unteren Rohrendes bringbar ist.

2. System nach Anspruch 1,
**dadurch gekennzeichnet, dass** die Abstützstruktur jeweils eine gabelförmig ausgebildete Aufnahmestruktur aufweist.

3. System nach Anspruch 1 oder 2, **dadurch gekennzeichnet, dass** an der Aufnahmeplattform (2) eine vertikal verfahrbare Abstützeinheit angebracht ist, auf der die Trennschweißanordnung im Zustand der festen Fügung zwischen der Befestigungsanordnung (8) und dem rohrförmigen Bauteil (1) aufliegt.

4. System nach einem der Ansprüche 1 bis 3,
**dadurch gekennzeichnet, dass** das mobile Transportmodul ein Niederflur-Transportfahrzeug, eine mobile Staplereinheit oder ein anderweitiges, Lasten tragendes, untersatzartig ausgebildetes Vehikel bzw. eine in der Produktionsebene handhabbare Vorrichtung bzw. Grundplattform ist.

5. System nach einem der Ansprüche 1 bis 4,
**dadurch gekennzeichnet, dass** die Befestigungsanordnung der Trennanordnung ein stirnseitig axial in das obere Ende des auf dem Aufnahmemodul vertikal aufsetzbaren, rohrförmigen Bauteils zumindest teilweise einsetzbares Klemmmodul umfasst, das zum lösbar festen Fügen an eine dem rohrförmigen Bauteil zugeordneten Rohrinnenwand ausgebildet ist, sowie ein drehbar an das Klemmmodul angebrachtes Trägerringmodul besitzt, das im gefügten Zustand des Klemmmoduls das obere Ende des rohrförmigen Bauteils axial überragt und mit einem Servomotor zum Drehantrieb des Trägerringmoduls um die Rohrlängsachse derart in Wirkverbindung steht, so dass das Trägerringmodul unendlich um die Rohrlängsachse drehbar gelagert ist.

6. System nach Anspruch 5,
**dadurch gekennzeichnet, dass** an dem Trägerringmodul wenigstens ein lineares Tragwerk angebracht ist, das vermittels eines Aktors parallel zur Rohrlängsachse des
auf dem Aufnahmemodul vertikal aufsetzbaren, rohrförmigen Bauteils bidirektional auslenkbar gelagert ist.

7. System nach Anspruch 6,
**dadurch gekennzeichnet, dass** die Manipulatoreinheit eine mindestens 3-achsige kinematische Kette, vorzugsweise jedoch eine 6-achsige offene kinematische Kette in Form eines vertikalen Knickarmroboters ist und an einem Ende des Tragwerks angebracht ist.

8. System nach Anspruch einem der Ansprüche 5 bis 7,
dass ein Versorgungsmodul vorgesehen ist, an dem wenigstens eine der folgenden Komponenten angebracht ist:
eine Steuereinheit, eine elektrische Energieversorgungseinheit, wenigstens ein Reservoir für den Trennprozess relevante Materialien, umfassend wenigstens Prozessgas,
dass die wenigstens eine Komponente über eine Verbindungsleitung mit dem Trennwerkzeug verbunden ist,
dass das Versorgungsmodul drehbar gelagert ist, zur Ausübung einer zur Bewegung des Trennwerkzeugs um die Rohrlängsachse simultanen Drehbewegung, die unendliche Drehungen des Schneidwerkzeuges um die Rohrlängsachse ermöglicht und
dass das Versorgungsmodul an einer zur Schneidanordnung separat ausgebildeten Tragstruktur zumindest längs einer Ebene frei positionierbar angelenkt ist, oder dass das Versorgungsmodul drehfest mit dem Trägerringmodul verbunden ist.

9. System nach einem der Ansprüche 1 bis 8,
**dadurch gekennzeichnet, dass** wenigstens ein berührungsloser Messsensor an der Trennanordnung und/oder an dem mobilen Transportmodul angeordnet ist, durch den die Kontur des Trennprozesses bzw. des zu trennenden rohrförmigen Bauteils erfassbar und der Prozess als solcher überwach- und übersteuerbar ist.

10. Verfahren zum Trennen eines rohrförmigen Bauteils (1), das für die Ausbildung eines Tragwerkes geeignet ist und über eine Rohrlängserstreckung mit beidseitig offen ausgebildete Rohrenden (7) verfügt, unter Verwendung eines Systems nach einem der Ansprüche 1 bis 9, dessen Trennwerkzeug unter Vorgabe einer Trennkurve längs der Außenwand des rohrförmigen Bauteils (1) geführt wird und diese zu durchtrennen vermag,
**gekennzeichnet durch** folgende Verfahrensschritte:
- Anordnen des rohrförmigen Bauteils mit vertikal orientierter Rohrlängserstreckung auf einem mobilen Transportmodul (3)
- Positionieren des rohrförmigen Bauteils (1) relativ zu einer an einer Tragstruktur (6) zumindest vertikal anhebbar und absenkbar angebrachten Trennanordnung (4),
- Aufsetzen und Befestigen der Trennanordnung (4) am oberen Rohrende des vertikal auf dem Transportmodul aufsitzenden rohrförmigen Bauteils,
- Durchtrennen des rohrförmigen Bauteils längs der Trennkurve zum Erhalt voneinander separierter Bauteil-Teile, in Form eines unteren und eines oberen Bauteil-Teils, vermittels der Trennanordnung (4),
- Abheben und Verbringen des oberen Bauteil-Teils vermittels der Trennschweißanordnung sowie
- Verbringen des auf dem mobilen Transportmodul aufliegenden unteren Bauteil-Teils.

11. Verfahren nach Anspruch 10,
**dadurch gekennzeichnet, dass** zumindest während des Durchtrennens die Trennanordnung (4) separat zum rohrförmigen Bauteil gegenüber dem mobilen Transportmodul (3) abgestützt wird.

12. Verfahren nach Anspruch 10 oder 11,
**dadurch gekennzeichnet, dass** das Durchtrennen vermittels wenigstens eines Trennwerkzeug (12) erfolgt, das radial außen zum rohrförmigen Bauteil angeordnet und längs der Trennkurve um das rohrförmige Bauteil geführt wird.

13. Verfahren nach einem der Ansprüche 10 bis 12,
**dadurch gekennzeichnet, dass** vor und/oder während des Durchtrennens das zu trennende rohrförmige Bauteils (1) berührungslos erfasst wird, und dass der Trennvorganges überwacht und falls erforderlich Korrekturen insitu vorgenommen werden.

14. Verwendung des Systems nach einem der Ansprüche 1 bis 9 zum Nachbearbeiten eines rohrförmigen Bauteils (1) im Wege eines Schleifvorganges, bei dem das am Manipulatorende angebrachte Trennwerkzeug (12) durch ein Schleifwerkzeug ersetzt wird und das Schleifwerkzeug im Zustand der auf dem zu bearbeitenden rohrförmigen Bauteils aufsitzenden Trennanordnung in bearbeitenden Eingriff mit der radial äußeren Mantelfläche des rohrförmigen Bauteils gebracht wird.

## Claims

1. System for separating a tubular component (1) which is suitable for constructing a supporting structure and can have a longitudinal pipe with pipe ends (7) that are open on both sides, with
- a mobile transport module (3) that comprises a receiving platform (2) with a pipe clamping device (14) that can be adapted to a variety of pipe diameters, which is designed to receive and stably mount the tubular component (1) in such a way that a first pipe end of the tubular component (1), whose longitudinal axis is oriented vertically, can be brought into detachable, secure engagement with the pipe clamping device (14), and
- a separating arrangement (4) which
- is mounted on a supporting structure (6) such that it can at least be raised and lowered,
- has a fastening arrangement (8) for detachable, secure joining to the second pipe end, opposite the first pipe end, of a tubular component (1) that is seated vertically on the mobile transport module and in secure engagement with the pipe clamping device, and
- provides at least one manipulator unit (11) which is attached indirectly or directly to the fastening arrangement with a freely positionable manipulator end to which a separating tool (12) is attached, which tool can be guided along a predeterminable trajectory relative to the tubular component radially outside of the tubular component, **characterized in that** the pipe clamping device comprises at least two clamping blocks (15) arranged along the receiving platform (2), which blocks are arranged on the inside and/or outside of a vertically orientated tubular component (1) that is supported indirectly or directly on the receiving platform (2), and are spread evenly along the inner wall or outer wall thereof, and are constructed in such manner that the clamping blocks (15) can be brought into engagement with the tubular component (1), exerting clamping forces that are directed radially outwardly and/or inwardly on the inner and/or outer wall, and that the clamping blocks each have a vertically adjustable bracing structure (16) which is constructed and arranged in such manner that each bracing structure can be brought into engagement with the respective local bracing area along a front rim of the lower pipe end which is assigned to the vertically orientated tubular component (1).

2. System according to Claim 1,
**characterized in that** each bracing structure has a forkshaped receiving structure.

3. System according to Claim 1 or 2,
**characterized in that** a vertically displaceable bracing unit is mounted on the receiving platform (2), on which the separating welding assembly is supported in the state in which a secure joint exists between the fastening arrangement (8) and the tubular component (1).

4. System according to any one of Claims 1 to 3,
**characterized in that** the mobile transport module is embodied as a low-loader transport vehicle, a mobile loading unit or some other load-bearing, bottom supporting vehicle or a device or base platform which can be operated in the production plane.

5. System according to any one of Claims 1 to 4,
**characterized in that** the fastening arrangement of the separating arrangement comprises a clamping module which can be inserted at least partially in the axial front face of the upper end of the tubular component that can be positioned vertically on the receiving module, which is designed for releasable, secure attachment to a pipe inner wall which is part of the tubular component, and has a carrier ring module which is mounted rotatably on the clamping module, which in the joined state of the clamping module protrudes axially beyond the upper end of the tubular component and is in operative connection with a servomotor for driving the carrier ring module rotationally about the pipe longitudinal axis such that the carrier ring module is mounted to as to be perpetually rotatable about the pipe longitudinal axis.

6. System according to Claim 5,
**characterized in that** at least one linear supporting structure is attached to the carrier ring module, which is mounted so as to be deflectable bidirectionally parallel to the pipe longitudinal axis of the tubular component that can be positioned vertically on the receiving module by means of an actuator.

7. System according to Claim 6,
**characterized in that** the manipulator unit is an at least 3-axis kinematic chain, but preferably a 6-axis, open kinematic chain in the form of a vertical articulated-arm robot and is mounted on one end of the supporting structure.

8. System according to any one of Claims 5 to 7,
**characterized in that** a supply module is provided on which at least one of the following components is mounted:
a control unit, an electrical power supply unit, at least one reservoir for materials required for the separating process, comprising at least process gas,
the at least one component is connected to the separating tool via a connecting line,
the supply module is mounted so as to be rotatable to impart a rotating motion about the pipe longitudinal axis simultaneous with the movement of the separating tool which enables perpetual rotations of the cutting tool about the pipe longitudinal axis and
the supply module is attached in articulated manner to a supporting structure constructed separately from the cutting arrangement in such manner as to be freely positionable at least along one plane, or that the supply module is connected to the carrier ring module in torque-proof manner.

9. System according to any one of Claims 1 to 8,
**characterized in that** at least one contactless measurement sensor is arranged on the separating arrangement and/or on the mobile transport module, via which the contour of the separating process and/or of the tubular component to be separated can be recorded, and the process as such can be monitored and overridden.

10. Method for separating a tubular component (1) which is suitable for constructing a supporting structure and has a longitudinal pipe with pipe ends (7) that are open on both sides using a system according to any one of Claims 1 to 9, of which the separating tool is guided by the specification of a separating curve along the outer wall of the tubular component (1) and is able to cut said component apart,
**characterized by** the following method steps:
- arranging the tubular component with vertically oriented longitudinal pipe on a mobile transport module (3),
- positioning the tubular component (1) relative to a separating arrangement (4) which is mounted on a supporting structure (6) such that it can be at least raised and lowered vertically,
- depositing and securing the separating arrangement (4) on the upper pipe end of the tubular component seated vertically on the transport module,
- separating the tubular component along the separating curve to obtain component parts that are disconnected from each other, in the form of a lower and an upper component part, by means of a separating arrangement (4),
- lifting and transporting away the upper component part by means of the separating welding assembly, and
- transporting away the lower component part which is supported on the mobile transport module.

11. Method according to Claim 10,
**characterized in that** at least during the separating process the separating arrangement (4) is braced against the mobile transport module (3) separately from the tubular component.

12. Method according to Claim 10 or 11,
**characterized in that** the separation is performed with the aid of at least one separating tool (12), which is arranged radially outside the tubular component and is guided along the separating curve around the tubular component.

13. Method according to any one of Claims 10 to 12,
**characterized in that** the tubular component (1) to be separated is captured contactlessly before and/or during the separation process, and
that the separating process is monitored and corrections are made *in situ* if necessary.

14. Use of the system according to any one of Claims 1 to 9 for reworking a tubular component (1) in a grinding process, in which the separating tool (12) attached to the manipulator end is replaced with a grinding tool, and with the separating arrangement seated on the tubular component to be machined the grinding tool is brought into processing engagement with the radially outer shell surface of the tubular component.

## Revendications

1. Système de séparation d'un composant tubulaire (1), qui convient à la construction d'une structure de support et qui peut avoir une extension de tuyau longitudinale avec des extrémités de tuyau ouvertes (7) des deux côtés, comportant
- un module de transport mobile (3), qui présente une plate-forme de réception (2) avec un dispositif de serrage de tuyaux (14) adaptable à différents diamètres de tuyaux, qui pour recevoir et stocker de manière stable le composant tubulaire (1) est conçu de telle sorte qu'une première extrémité de tuyau du composant tubulaire (1), dont l'axe longitudinal du tuyau est orienté verticalement, puisse être mis en prise amovible avec le dispositif de serrage de tuyaux (14), et
- un agencement de séparation (4) qui
- est monté de manière à pouvoir être au moins surélevé et abaissé sur une structure de support (6),
- a un agencement de fixation (8) adapté pour être solidement fixé de manière amovible à la seconde extrémité de tuyau opposée à la première extrémité de tuyau d'un composant tubulaire (1) reposant sur le module de transport et mis en prise ferme avec le dispositif de serrage de tuyau verticalement, ainsi que
- pourvoit au moins une unité de manipulation (11) fixée directement ou indirectement à l'agencement de fixation d'une extrémité de manipulation librement positionnable, sur laquelle est fixé un outil de séparation (12), qui peut être guidé le long d'une trajectoire qui peut être prédéterminée radialement à l'extérieur du composant tubulaire, par rapport au composant tubulaire,
**caractérisé en ce que** le dispositif de serrage de tuyau comprend au moins deux blocs de serrage (15) qui sont disposés le long de la plateforme de réception (2), à l'intérieur et/ou à l'extérieur par rapport à un composant tubulaire (1) orienté verticalement, qui est supporté directement ou indirectement sur la plate-forme de réception (2), en étant répartis uniformément le long de sa paroi intérieure ou sa paroi extérieure et sont configurés de telle sorte que les blocs de serrage (15) puissent être mis en prise en exerçant des forces de serrage orientées radialement vers l'extérieur et/ou vers l'intérieur sur la paroi intérieure et/ou extérieure avec l'élément tubulaire (1), et **en ce que** les blocs de serrage ont chacun une structure de support à réglage vertical (16), qui est conçue et disposée de telle sorte que la structure de support puisse dans chaque cas être mise en prise avec une région de support locale le long d'une face d'extrémité de l'extrémité de tuyau inférieure associée au composant tubulaire orienté verticalement (1).

2. Système selon la revendication 1,
**caractérisé en ce que** la structure de support présente respectivement une structure de réception en forme de fourche.

3. Système selon la revendication 1 ou 2,
**caractérisé en ce que** sur la plate-forme de réception (2) est fixée sur une unité de support mobile verticalement, sur laquelle le dispositif de soudage de séparation vient reposer à l'état de jointure ferme entre le dispositif de fixation (8) et le composant tubulaire (1).

4. Système selon une quelconque des revendications 1 à 3,
**caractérisé en ce que** le module de transport mobile est un véhicule de transport à plancher surbaissé, un empileur mobile ou un autre véhicule porteur en forme de piédestal ou un dispositif ou plate-forme de base pouvant être manipulé au niveau de la production.

5. Système selon une des revendications 1 à 4,
**caractérisé en ce que** l'agencement de fixation de l'agencement de séparation comprend un module de serrage au moins partiellement insérable dans l'extrémité supérieure du composant tubulaire qui peut être placé verticalement sur le module de réception, qui est configuré afin d'être fixé de façon amovible à la paroi intérieure du tuyau associé au composant tubulaire, et possède également un module d'anneau porteur monté sur le module de serrage, qui fait saillie axialement au-dessus de l'extrémité supérieure du composant tubulaire à l'état assemblé du module de serrage et est raccordé de manière opérationnelle à un servomoteur pour faire tourner le module d'anneau porteur autour de l'axe longitudinal du tuyau, de sorte que le module d'anneau porteur soit supporté en rotation à l'infini autour de l'axe longitudinal du tuyau.

6. Système selon la revendication 5,
**caractérisé en ce que** au moins une structure de support linéaire est fixée au module d'anneau porteur, qui est monté de manière déviable bidirectionnellement au moyen d'un actionneur parallèlement à l'axe longitudinal de tuyau du composant tubulaire qui peut être placé verticalement sur le module de réception.

7. Système selon la revendication 6,
**caractérisé en ce que** l'unité de manipulation est une chaîne cinématique à au moins 3 axes, néanmoins de préférence une chaîne cinématique ouverte à 6 axes sous la forme d'un robot à bras articulé vertical et est fixée à une extrémité de la structure porteuse.

8. Système selon une des revendications 5 à 7,
selon lequel il est prévu un module d'alimentation sur lequel au moins l'un des composants suivants sont fixés :
une unité de commande, une unité d'alimentation électrique, au moins un réservoir de matériaux pertinents pour le processus de séparation, comprenant au moins un gaz de traitement,
en ce que le au moins un composant est raccordé via une ligne de connexion avec l'outil de séparation,
en ce que le module d'alimentation est positionné rotativement, pour exercer un mouvement de rotation simultané pour déplacer l'outil de séparation autour de l'axe longitudinal du tuyau, ce qui permet des rotations infinies de l'outil de coupe autour de l'axe longitudinal du tuyau et
en ce que le module d'alimentation peut être articulé de manière librement positionnable au moins le long d'un plan sur une structure de support formée séparément par rapport au dispositif de coupe, ou que le module d'alimentation est raccordé en rotation au module d'anneau porteur.

9. Système selon une des revendications 1 à 8,
**caractérisé en ce que** au moins un capteur de mesure sans contact est disposé sur le dispositif de séparation et/ou sur le module de transport mobile, par l'intermédiaire duquel le contour du processus de séparation ou du composant tubulaire à séparer peut être détecté et le processus comme ceux-ci peuvent être surveillés et pilotés.

10. Procédé pour séparer un composant tubulaire (1), qui convient à la formation d'une structure de support et possède une extension de tuyau longitudinale avec des extrémités de tuyau ouvertes (7), en utilisant un système selon une des revendications 1 à 9, dont l'outil de coupe est guidé le long de la paroi extérieure du composant tubulaire (1) et est capable de le traverser,
**caractérisé par** les étapes de procédé suivantes consistant à :
- disposer le composant tubulaire avec une extension longitudinale de tuyau orientée verticalement sur un module de transport mobile (3),
- positionner l'élément tubulaire (1) par rapport à un agencement de séparation (4) fixé à une structure de (6), qui peut être soulevée et abaissée au moins verticalement,
- placer et fixer l'agencement de séparation (4) sur l'extrémité supérieure du tuyau du composant tubulaire assis verticalement sur le module de transport,
- couper le composant tubulaire le long de la courbe de séparation pour obtenir des composants séparés, sous la forme d'un composant inférieur et d'un composant supérieur, au moyen de l'agencement de séparation (4),
- soulever et déplacer la partie supérieure du composant au moyen du dispositif de soudage de séparation,
- déplacer la partie inférieure du composant reposant sur le module de transport mobile.

11. Procédé selon la revendication 10,
**caractérisé en ce que** le au moins pendant la découpe l'agencement de séparation (4) est supporté séparément du composant tubulaire par rapport au module de transport mobile (3).

12. Procédé selon la revendication 10 ou 11,
**caractérisé en ce que** la découpe a lieu au moyen d'au moins un outil de coupe (12), qui est disposé radialement à l'extérieur du composant tubulaire et est guidé le long de la courbe de coupe autour du composant tubulaire.

13. Procédé selon une quelconque des revendications 10 à 12,
**caractérisé en ce qu'**avant et/ou pendant la découpe, le composant tubulaire (1) à séparer est détecté sans contact, et que le processus de séparation est surveillé et, si nécessaire, des corrections sont effectuées in situ.

14. Utilisation du système selon une des revendications 1 à 9 pour l'usinage de finition d'un composant tubulaire (1) au moyen d'un processus de meulage, dans lequel l'outil de coupe (12) fixé à l'extrémité de manipulation est remplacé par un outil de meulage et l'outil de meulage est amené en prise d'usinage avec la surface circonférentielle radialement extérieure du composant tubulaire dans l'état où l'agencement de séparation repose sur le composant tubulaire à usiner.
